Europäisches Patentamt

European Patent Office

Office européen des brevets

(11) Publication number: **0 094 272**
**A1**

(12) # EUROPEAN PATENT APPLICATION

(21) Application number: **83400751.0**

(22) Date of filing: **15.04.83**

(51) Int. Cl.³: **H 01 M 2/04**

(30) Priority: **12.05.82 US 377400**

(43) Date of publication of application: **16.11.83**
**Bulletin 83/46**

(84) Designated Contracting States: **BE CH DE FR GB LI**

(71) Applicant: **UNION CARBIDE CORPORATION, Old Ridgebury Road, Danbury Connecticut 06817 (US)**

(72) Inventor: **Heinz, Henry, Jr., 26010 Butternut Ridge Road, North Olsted Ohio 44070 (US)**
Inventor: **Smilanich, Nicholas Joseph, 3449 Delmar Drive, Rocky River Ohio 44116 (US)**

(74) Representative: **Rinuy, Guy et al, Cabinet Rinuy et Santarelli 14, Avenue de la Grande Armée, F-75017 Paris (FR)**

(54) Cell cover assembly for galvanic cells.

(57) The invention deals with a cell cover assembly for galvanic cells which reduces leakage of cell electrolyte by encreasing the distance electrolyte must travel to reach the exterior of the cell without appreciably increasing the thickness of the cell cover assembly. The cell cover assembly comprises at least two cell covers (7 and 8) and at least one annular member (9) compressively disposed between the peripheries of the cell covers. The thicknesses of the cell covers are minimized to provide a multiple cell cover assembly having minimum height.

EP 0 094 272 A1

- 1 -

## DESCRIPTION

## CELL COVER ASSEMBLY FOR GALVANIC CELLS

### Technical Field

This invention relates to sealing galvanic cells; more specifically, the invention relates to an improved cell cover assembly which provides an effective barrier to electrolyte leakage and which does not appreciably increase the height of the cell.

### Background Art

Sealed electrochemical cells provide portable sources of energy for electrical devices. Some electrical devices, such as hearing aids, calculators and cameras, require extremely small but powerful sources of energy, which demand is met by miniature galvanic cells commonly known as button cells. Button cells, so called because of their appearance, generally comprise a cathode material, an anode material, a separator material therebetween, and an electrolyte in ionic contact with the cathode material and anode material, housed in a cell container having a base, a sidewall and an open end, and a cell cover over the open end of the container with a sealing means such as a sealing gasket therebetween. An important objective in the design of a long-life button cell is to maximize the cell volume allocated to consumable cathodic and anodic material, which is generally accomplished by minimizing the cell height apportioned to other cell components such as the cell cover. Cell height has become increasingly important in applications in which the button cell is designed to fit snugly into a miniature cavity of an electronic device.

Many efficient button cell systems utilize a liquid electrolyte which could be corrosive to the cell or to the electrical device in which the cell is housed if the electrolyte should leak out of the cell. Alkaline electrolytes, such as aqueous potassium hydroxide and sodium hydroxide solutions, have a propensity to wet along metal surfaces, which is a major cause of leaking in such cells. An alkaline electrolyte, by wetting the surface of a metal, can actually "creep" through a sealed metal interface, such as the interfaces between a cell sealing gasket and a metal container and a cell sealing gasket and a metal cover of a cell. Typical cell systems where this problem is encountered include silver oxide-zinc cells, nickel-cadmium cells, air-depolarized cells and alkaline manganese dioxide cells.

One prior art approach, which addresses the problem of electrolyte creepage, provides a stable long lasting seal by constructing a long tortuous path that electrolyte must traverse before reaching the exterior of the cell. An example of this approach is the double cell cover, or double anode cover, disclosed in United States Patent 2,712,565 wherein the top closure of a galvanic cell comprises a pair of metal discs in contact at their centers and slightly separated at their peripheral edges so that electrolyte must travel past the interface between the sealing gasket and the first disc, along the top of the first disc until it contacts the bottom surface of the second disc, then along the bottom of the second disc, and past the interface between the sealing gasket and the second disc before it reaches the exterior of the cell. This patent also teaches that a portion of the sealing gasket can be forcibly compressed into the interspace between the edges of the two cover discs so as to maintain the separation of said disc edges.

The concept of a double cell cover has since been extended as in United States Patent 3,096,217 wherein materials most compatible for uses as inner and outer cell covers are disclosed; United States Patent 3,457,117, which discloses a metal layer disposed between the two cell covers which further lengthens the path that electrolyte must travel before leakage occurs and which layer also reacts with electrolyte to form solid reaction products; and United States Patent 4,122,241 which describes an extended sealing gasket design for use in conjunction with a double cell cover.

United States Patent 3,708,343 describes a sealed galvanic cell having a sealing gasket compressively disposed between a single cell cover and a cell container sidewall, and an auxiliary cap having a central aperture and downwardly extending end portions, said auxiliary cap being bonded to the cell cover and to the upper sidewall of the cell container so as to provide an additional seal.

United States Patent 4,263,380 discloses a sealed electrochemical cell having a sealing gasket compressively disposed between the upper portion of the cell container sidewall and the cell cover to form a first barrier to electrolyte leakage, and having further a second cell cover whose edge extends downward parallel to the container sidewall enclosing the first cell cover and the upper portion of the container sidewall, which void volume between the second cell cover and the container sidewall is filled with a sealing resin, thus forming a second barrier to electrolyte leakage.

None of the above prior art teachings consider the height of the cell as a design criterion for the cell cover assembly, and in fact each of the cell cover assemblies increases some dimension of the cell, generally the height. A button cell, having a height restriction due to the specific size cavity in which it must fit in an electrical device, would surrender valuable cell height to the cell cover assemblies of the prior art teachings and thereby reduce the available volume for active cell components. It would be a significant improvement in multiple cell cover assemblies to provide a multiple cell cover assembly which height is not appreciably greater than a single cell cover so that for a given cell height, the internal volume can be maximized for use by the active cell components.

Hence, it is an object of this invention to provide an electrochemical cell having an extended path which electrolyte must travel to reach the exterior of the cell.

It is another object of the present invention to provide a cell cover assembly which does not signiticantly increase cell height.

It is a further object of this invention to proviae a cell cover assembly that is amenable to mass production techniques at low cost.

These and aaditional objects of the present invention will become apparent from the disclosure and accompanying figures which follow.

## Disclosure of Invention

This invention relates to a sealed galvanic cell comprising a cell container having a base, a sidewall and an open end housing a cathode material in electrical contact with said cell container, an anode material, a separator material therebetween, an electrolyte therein in ionic contact with said cathode material and said anode material, a cell cover assembly disposed over the open end of said cell container and in electrical contact with said anode material, and a sealing gasket compressively disposed between the upper portion of said cell container sidewall and the cell cover assembly so as to seal in the contents of said galvanic cell; the improvement being a cell cover assembly having an inner electrically conductive cover of sufficient thickness to maintain its structural integrity under cell sealing forces and an outer electrically conductive cover of lesser thickness, said cell covers being in electrical contact and wherein an annular member is compressively interposed between the top peripheral portion of the inner cover and the bottom peripheral portion of the outer cover so that the distance said electrolyte must traverse to reach the exterior of the cell is increased. Preferably the outer cell cover should have a thickness of from between about 5 and about 60 per cent of the thickness of the inner cell cover. More preferably, for button cells of about 0.5 inch (1.27 cm) and smaller in height the thickness of the outer cell cover ranges from about 30 to about 50 per cent of the thickness of the inner cell cover.

This invention also relates to a cell cover assembly for galvanic cells comprising at least three cell covers and at least two annular members, wherein at least two cell covers have individual thicknesses not sufficient to maintain the structural integrity of the cell cover under cell sealing forces, but which combination of at least three cell covers does possess sufficient thickness to maintain the structural integrity of said cell cover assembly under cell sealing forces and wherein an annular member is compressively interposed between the peripheries of each pair of adjacent cell covers. Preferably all of the cell covers are chosen so as to minimize the thickness of the cell cover assembly. This embodiment greatly extends the path that electrolyte must travel to reach the exterior of the cell but does not displace active cell component volume in galvanic cells having restricted heights.

Tnis invention especially relates to alkaline cells wherein the alkaline electrolyte wets and creeps along metal surfaces, and in particular to miniature alkaline cells wherein the overall height of the cell is restricted.

Preferably a cell cover assembly of this invention utilizes a dual cell cover in which the thicknesses of the individual cell covers are selected so that the combined thickness of the inner and outer cell covers is approximately equal to that of a conventional single cover for a similar size cell. Typically, button cells having a diameter of 0.5 inch (1.27 cm) and smaller have a single cell cover which has a thickness of from about 0.006 inch (0.015 cm) to about 0.012 inch (0.030 cm) so as to enable the cover to retain its shape when the cell components are assembled and sealed under radial and compressive forces. When the cell is sealed the container sidewall is swaged, that is, the container diameter is reduced by radial forces, which compresses the cell sealing gasket between the container sidewall and the outer edge of the cell cover. Additionally, the uppermost portion of the container sidewall is crimped, or bent inwardly to exert vertical sealing forces. A cell cover must be sufficiently strong to withstand these sealing forces.

As disclosed herein the dual cell cover assembly of this invention utilizes an inner cell cover of sufficient thickness to withstand cell sealing forces. A cell cover having a thickness of at least about 0.006 inch (0.015 cm) will maintain its integrity under general swaging and crimping conditions of 0.5 inch (1.27 cm) diameter and smaller diameter cells. For use in button cells of about 0.5 inch (1.27 cm) and less in height, it is preferred that the cell cover assembly of this invention incorporate an inner cell cover having a thickness of from between about 0.006 inch (0.015 cm) and about 0.012 inch (0.030 cm); 0.012 inch (0.030 cm) being the approximate maximum thickness of a typical single cell cover for cells of this size and height.

While the inner cell cover provides strength to the cell cover assembly to withstand cell sealing forces, the path which electrolyte must travel to reach the exterior of the cell is lengthened by the use of an outer cell cover and an

annular insulating and separating member interposed between the peripheries of the inner and outer cell covers. Because the inner cell cover withstands cell sealing forces, the outer cell cover can be significantly thinner without any disturbance to the structural integrity of the cell cover assembly. The thickness of this outer cell cover generally can be from between about 0.001 inch (0.003 cm) and about 0.003 inch (0.008 cm) for cell sizes as stated above. Thus, the ratio of the thickness of the inner cell cover to the thickness of the outer cell cover ranges from about 12:1 to about 2:1. At most the combined thickness of the inner and outer cell covers is preferably chosen so as not to be appreciably greater than the thickness of a single cell cover assembly for similar applications.

In further keeping with the cell cover assembly of this invention, there is compressively interposed at the edges of the covers an annular insulating and separating member which maintains a separation between the peripheries of the cell covers. In this manner, electrolyte seeking to creep to the exterior of a cell having a dual cover assembly of this invention must first pass across the interface between the sealing gasket and the inner cell cover, past the interface between the upper surface of the inner cover and the member which separates the two covers, along the upper surface of the inner cover until it reaches the point where the inner cover contacts the outer cover, then the electrolyte must continue along the lower surface of the outer cover, past the interface between the outer cover and the member which separates the peripheries of the covers, and past the interface between the sealing gasket and the outer cover. This long, tortuous path is insured by making the insulating and separating member between the peripheries of the cell covers from a material which is not wetted by electrolyte or if wetted by electrolyte then coated with a nonwetting agent. The nonwetting characteristic of the insulating and separating member inhibits electrolyte from creeping across the member to shorten the travel path to the cell exterior. Materials which are suitable for use as the annular member between the peripheries of the cell covers are selected from the group consisting of nylon, polypropylene, polyethylene-tetrafluoroethylene copolymer, high density polyethylene, fatty polyamides, asphalt, epoxies and combinations thereof. Preferably, the above materials which may be wetted by electrolyte are coated with a nonwetting agent such as a fatty polyamide resin. Generally, an annular member having a thickness of from about 0.001 inch (0.003 cm) to about 0.003 inch (0.008 cm) is sufficient to produce the tortuous path for electrolyte travel. The annular member maintains the separation between the cell covers thereby preventing a shortened travel path for electrolyte.

The annular insulating and separating member is generally positioned between the cell covers prior to the covers being bonded together. Thus, in an off-line assembly the annular member may be disposed between the cell covers and the cell covers united as by spot welding. This cell cover assembly can be handled in a commercial operation in the same manner as a single cell cover. Alternatively, as for a dual cell cover of this invention, the inner cell cover may be seated over the cell components and this partially assembled cell swaged, after which the annular separating member and an outer cell cover are positioned over the inner cell cover and the cell assembly completed by crimping the container sidewall.

The insulating and separating member may be a separate annular member or layer or may be an inward projection of the cell sealing gasket positioned between the cell covers. It is not sufficient to rely on the cell sealing forces to interpose a portion of the sealing gasket between the peripheries of the two cell covers. Because of the thinness of the outer cell cover, unless a separating member is deliberately positioned between the cell covers, the cell sealing forces may bring the edges of the covers into contact, shortening the path that electrolyte must travel to reach the exterior of the cell.

An alternative embodiment of this invention which greatly extends the path that electrolyte must travel to reach the exterior of the cell comprises at least three cell covers and at least two annular insulating and separating members, each compressively disposed between the peripheries of adjacent cell covers. The thicknesses of all the cell covers are chosen so that the height of the accumulation of cell covers in the cell cover assembly is not appreciably greater than the height of a single cell cover for similar applications. As with the dual cell cover assembly discussed above, the peripheries of adjacent cell covers are separated by an insulating and separating member interposed therebetween.

The first or inner cell cover of a cell cover assembly having at least three cell covers may have a thickness similar to the thickness of the inner cover of a dual cell cover assembly so as to withstand cell sealing forces. The additional two or more cell covers may have thicknesses generally in the range of the thickness of the outer cover of a dual cell cover assembly, which assembly has been described herein.

Preferably, for a miniature galvanic cell, such as a miniature alkaline cell having an overall height of 0.5 inch (1.27 cm) or less, a cell cover assembly having at least three cell covers comprises cell covers each having a thickness of from about 0.001 inch (0.003 cm) to about 0.005 inch (0.013 cm). The periphery of each cell cover is preferably separated from the peripheries of adjacent cell covers by annular members compressively disposed therebetween. While an individual cell cover having a thickness in the range as stated above could not maintain its desired shape under typical cell sealing forces, the cell cover assembly which comprises at least three cell covers having thicknesses as stated above is sufficiently strong to undergo cell sealing without detrimentally altering the structure of the cell assembly. Such a cell cover assembly may have an overall thickness which is slightly greater than, approximately equal to, or less than the thickness of a single cell cover for comparable applications. Because of the thinness of each cell cover, this embodiment of the invention is preferably completely assembled prior to mating with the cell container.

Each cell cover of this invention may comprise a single material, a biclad or triclad material, or a metal plated material or any combination thereof. A clad material is a composite material having a metal layer, generally a layer of steel, bonded on one or both sides to one or more other metals. Clad materials are known as covers for galvanic cells. Generally, a metal which is well suited to withstand the internal cell environment is clad to steel which provides the cover with strength, the cladding metal facing the interior of the cell and protecting the steel layer from corrosion. As an example of a dual cover assembly, the inner cover of the assembly may comprise a biclad material such as copper clad monel, copper facing the interior of the cell, and the outer cover of the assembly may be nickel. Intimate physical and electrical contact between each adjacent cell cover can be achieved by press-fitting, spot welding, bonding with electrically conductive resins, or other means obvious to one skilled in the art. Suitable materials for the cell covers of this invention are selected from the group consisting of nickel, monel, copper, tin, steel, nickel-plated steel, copper clad steel, tin clad steel and alloys and combinations thereof. Additional cell cover materials are well known to those skilled in the art.

## Brief Description of Drawings

The present invention will become more apparent from the following description thereof when considered together with the accompanying drawings which are set forth as being exemplary of two embodiments of the present invention and are not intended in any way to be limitative thereof and wherein:

Figure 1 is a cross sectional side elevation of an assembled miniature galvanic cell incorporating a dual cell cover assembly disclosed by this invention; and

Figure 2 is a cross sectional side elevation of an assembled miniature galvanic cell having a cell cover assembly which comprises three cell covers.

Detailed Description of Drawings

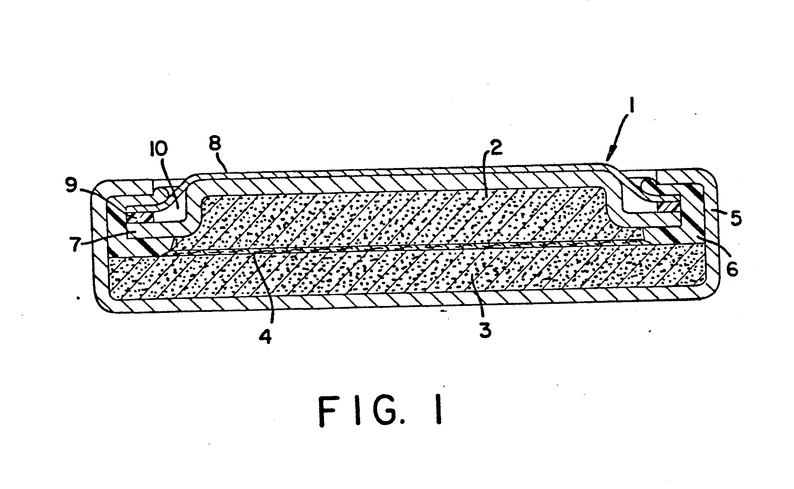

Referring to Figure 1 there is shown therein in cross section an assembled miniature cell designated by reference number 1 having a cell container 5 which houses a cathode material 3, a separator 4, and an anode material 2. An electrolyte is absorbed by the separator 4 and is in ionic contact with the cathode and anode of the cell.

The cell cover assembly comprises an inner cover 7, which has a sufficient thickness so that the cover will form a tight seal when the sealing gasket 6 is radially squeezed between the container sidewall and the cell cover assembly, an outer cover 8 having a thickness less than that of cell cover 7, and an annular insulating and separating ring or layer 9 compressively disposed between the peripheries of the cell covers.

In order for cell electrolyte to reach the exterior of the cell, it must pass across the interface between the sealing gasket 6 and the lower and side surfaces of inner cell cover 7, across the interface between the separating ring 9 and the upper surface of inner cell cover 7, along the upper surface of the inner cell cover 7 until it contacts the lower surface of the outer cell cover 8, along the lower surface of the outer cell cover 8, past the interface between the separating ring 9 and the lower surface of outer cell cover 8, and across the interface between the sealing gasket 6 and the upper surface of outer cell cover 8. During such travel, the electrolyte does not bridge across the insulating and separating ring 9 if the ring is not wetted by cell electrolyte or is coated with a nonwetting agent. In some circumstances electrolyte may accumulate in air space 10.

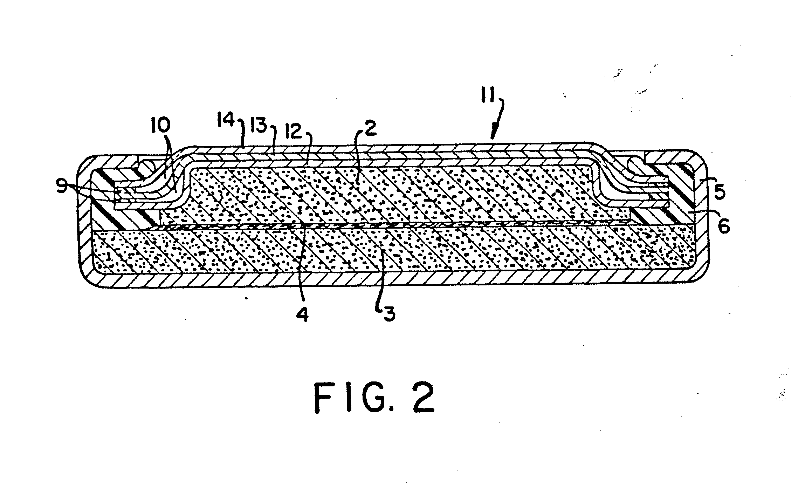

Figure 2 shows in cross section an assembled miniature cell identified by reference number 11. The common components of Figures 1 and 2 have been identified with the same reference numbers. The miniature cell 11 comprises a cell container 5 which houses a cathode material 3, a separator 4, and an anode material 2. An electrolyte is absorbed by the separator 4 and is in ionic contact with the cathode material and the anode material.

The cell cover assembly comprises three cell covers 12, 13 and 14 and two separating rings identified by the number 9, one compressively disposed between the peripheries of adjacent covers 12 and 13 and one compressively disposed between the peripheries of adjacent cell covers 13 and 14. To creep past the cell cover assembly to the exterior of the cell, electrolyte must traverse the lower surface of innermost cell cover 12, the upper surface of cell cover 12 until it meets the lower surface of cell cover 13, then along the lower surface of cell cover 13 and the upper surface of the cover 13 until it contacts the lower surface of outer cell cover 14, along the lower surface of cell cover 14 and finally along the upper surface of cell cover 14 until it escapes from the interface between sealing gasket 6 and the upper surface of cell cover 14. Creepage along this path is hindered by the interfaces between sealing gasket 6 and the metal surfaces of the three cell covers and by the interfaces between separating rings 9 and the cell covers.

The cell covers 12, 13 and 14 are thin so that the combined thickness of the cell covers is approximately the same as a dual cell cover assembly of this invention or a single cell cover which could be used for similar applications. Although cell covers 12, 13 and 14 do not possess sufficient individual strength, because of their small height, to withstand cell sealing forces, the combination of the three cell covers does possess the necessary strength.

As is seen from the figures, the path which electrolyte must travel in order to escape from a galvanic cell utilizing a cell cover assembly of this invention is long and tortuous, but the overall height of said cell cover assembly is not appreciably greater than a single cell cover for a similar application.

## EXAMPLE I

Several cell cover assemblies using various materials which could be used in miniature galvanic cells are proposed in Table 1. Each cell cover assembly could utilize a fatty polyamide coated nylon annulus having a thickness of about 0.002 inch (0.005 cm) and compressively interposed between the peripheral edges of the inner and outer cell covers. As is seen in Table 1, individual cell covers may comprise a single material or a clad material. Additional combinations are obvious to one skilled in the art. For clad materials presented in Table 1, the per cents shown in parenthesis are percent heights of each particular material based on the total height of the composite clad material. Preferably the surface of the inner cell cover which contacts the anodic material of the cell comprises a material such as copper or tin which is inert to the anodic material. The most preferred material for use as the inner cell cover depends on the particular active cell components used in the cell system. Also, the surface of the outer cell cover which functions as the negative lead of the cell comprises a material such as nickel which readily forms an electrical contact with the negative lead of an electronic device.

TABLE 1

**Proposed Cell Cover Assemblies**

| Cell Cover Assembly | Inner Cover Composition | Inner Cover Thickness (cm) | Outer Cover Composition | Outer Cover Thickness (cm) | Cell Cover Assembly Thickness (cm) | Cover Thickness Ratio* |
|---|---|---|---|---|---|---|
| 1 | Monel | 0.010 | Nickel | 0.004 | 0.014 | 2.5:1 |
| 2 | Copper clad monel (7.5% copper, 92.5% monel) | 0.010 | Nickel plated Stainless steel | 0.005 | 0.015 | 2:1 |
| 3 | Copper clad Stainless steel (20% copper, 80% stainless steel) | 0.010 | Nickel plated Stainless steel | 0.002 | 0.012 | 5:1 |
| 4 | Copper clad monel (7.5% copper, 92.5% monel) | 0.010 | Nickel | 0.001 | 0.011 | 10:1 |

*Cover Thickness Ratio is the ratio of the thickness of the inner cell cover to the thickness of the outer cell cover.

## EXAMPLE II

This example demonstrates the improved resistance to electrolyte leakage of cells utilizing a dual cell cover assembly of this invention.

Galvanic button cells having silver oxide cathodes, zinc anodes and aqueous potassium hydroxide solution electrolytes were manufactured having either a single cell cover or a dual cell cover assembly as described by this invention.

Cells having single cell covers were used as control lots. The control cell covers comprised copper clad stainless steel having a thickness of about 0.0115 inch (0.0292 cm) (20% height copper, 80% height stainless steel). The double cell cover assembly comprised a first inner cover of copper clad monel having a thickness of 0.010 inch (0.025 cm) (7.5% height copper and 92.5% height monel) and a second outer cover of stainless steel having a thickness of about 0.002 inch (0.005 cm). A nylon ring coated with a fatty polyamide sealing agent available under the tradename Swift Z-610 from the Swift Chemical Company having a thickness of about 0.002 inch (0.005 cm) separated the peripheries of the two cell covers. The cell covers were spot welded together. The overall thickness of the double cell cover assembly was about 0.012 inch (0.031 cm).

All the assembled cells had finished dimensions of about 0.310 inch (0.787 cm) diameter and about 0.140 inch (0.356 cm) height. Cells were stored under various environmental conditions and monitored for electrolyte leakage. The cell storage conditions and leakage results are presented in

0094272

Table 2. As is shown in Table 2, under various conditions of temperature and humidity the button cells having double cell cover assemblies consistently had significantly less leakage than control cells having single cell covers of about the same thickness.

0094272

## TABLE 2

### Electrolyte Leakage Under
### Various Storage Conditions

| Storage Conditions | | | Percent Leakage |
|---|---|---|---|
| 21°C 50% Relative Humidity 17 weeks | ) ) ) | 100 Control Cells 150 Double Cover Cells | 12.0 3.0 |
| 45°C 90% Relative Humidity 9 weeks | ) ) ) | 50 Control Cells 60 Double Cover Cells | 42.0 1.6 |
| 60°C 90% Relative Humidity 9 weeks | ) ) ) | 50 Control Cells 60 Double Cover Cells | 18.5 0.0 |

It is to be understood that other modifications and changes to the disclosed embodiments of the invention herein shown and described can also be made without departing from the spirit and scope of this invention.

CLAIMS

1.  A sealed galvanic cell (1) comprising a cell container (5) having a base, a sidewall and an open end housing a cathode material (3) in electrical contact with said cell container, an anode material (2), a separator material (4) therebetween, an electrolyte therein in ionic contact with said cathode material and said anode material, a cell cover assembly disposed over the open end of the cell container and in electrical contact with said anode material, and a sealing gasket (6) compressively disposed between the upper portion of said cell container sidewall and the cell cover assembly; characterized in that the said cell cover assembly has an inner electrically conductive cover (7) of sufficient thickness to maintain its structural integrity under cell sealing forces and an outer electrically conductive cover (8) of lesser thickness, said covers being in electrical contact and wherein an annular member (9) is interposed between the top peripheral portion of the inner cover and the bottom peripheral portion of the outer cover so that the distance said electrolyte must traverse to reach the exterior of said cell is increased.

2.  The sealed galvanic cell in accordance with claim 1 wherein the ratio of the thickness of the inner cell cover (7) to the thickness of the outer cell cover (8) is from 12:1 to 2:1.

3.  A sealed galvanic cell (11) comprising a cell container (5) having a base, a sidewall and an open end housing a cathode material (3) in electrical contact with said cell container, an anode material (2), a separator material (4) therebetween, an electrolyte therein in ionic contact with said cathode material and said anode material, a cell cover assembly disposed over the open end of the cell container and in electrical contact with said anode material, and a sealing gasket (6) compressively disposed between the upper portion of said cell container sidewall and the cell cover assembly; characterized in that the said cell cover assembly comprises at least three cell covers (12, 13 and 14) and at least two annular members (9) wherein at least two cell covers have thicknesses not sufficient to maintain the structural integrity of said cell cover under cell sealing forces but which combination of at least three cell covers does possess sufficient thickness to maintain the structural integrity of said cell cover assembly under cell sealing forces and wherein an annular member is interposed between the peripheries of each pair of adjacent cell covers.

4. The sealed galvanic cell in accordance with claim 1 or 6 wherein said galvanic cell is a miniature alkaline cell having an overall height of 0.5 inch (1.27 cm) or less.

5. The sealed galvanic cell in accordance with the combination of the claims 1 and 4 characterized in that said inner cell cover (7) has a thickness of from between 0.006 inch (0.015 cm) and 0.012 inch (0.030 cm).

6. The sealed galvanic cell in accordance with the combination of the claims 1 and 4 or 1 and 5 characterized in that said outer cell cover (8) has a thickness of from between 0.001 inch (0.003 cm) and 0.003 inch (0.008 cm).

7. The sealed galvanic cell in accordance with the combination of the claims 3 and 4 characterized in that each of said cell covers (12, 13 or 14) has a thickness of from 0.001 inch (0.003 cm) to 0.005 inch (0.01 cm).

8. The sealed galvanic cell in accordance with claim 1 or 3 wherein said covers (7, 8, 12, 13 or 14) each comprise a single material, a clad material, a plated material or any combination thereof.

9. The sealed galvanic cell in accordance with claim 1 or 3 wherein said cell covers (7, 8, 12, 13 or 14) are made from at least one material selected from the group consisting of nickel, monel, copper, tin, steel, nickel-plated steel, copper clad steel and tin clad steel.

10. The sealed galvanic cell in accordance with claim 1 or 3 wherein said annular member (9) is made from a material selected from the group consisting of nylon, polypropylene, polyethylene-tetrafluoroethylene copolymer, high density polyethylene, fatty polyamides, asphalt, epoxies and combinations thereof or wherein said annular member (9) is an inward projection of said cell sealing gasket.

FIG. I

FIG. 2

0094272

**European Patent Office**

## EUROPEAN SEARCH REPORT

Application number

EP 83 40 0751

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A-1 550 713 (MALLORY BATTERIES) * Figures 1,2; page 3, left-hand column, lines 9-27 * | 3 | H 01 M 2/04 |
| A | DE-A-2 018 831 (LECLANCHE) * Figure; page 2, line 32 - page 3, line 8 * | | |
| A | CH-A- 497 049 (LECLANCHE) * Figure 1; column 3, lines 62-67 * | | |
| A | GB-A-1 150 514 (EASTMAN KODAK) | | |
| A | FR-A-2 381 397 (SAFT) | | TECHNICAL FIELDS SEARCHED (Int. Cl. ³) H 01 M 2/04 H 01 M 2/02 H 01 M 6/12 |
| A | US-A-3 415 690 (S.L. RICHMAN) | | |
| P,A | EP-A-0 068 183 (UNION CARBIDE) * Figure; page 2, line 31 - page 3, line 30; page 4, lines 3-19 * | 1 | |

| | | | |
|---|---|---|---|
| The present search report has been drawn up for all claims | | | |
| Place of search THE HAGUE | Date of completion of the search 23-08-1983 | Examiner D'HONDT J.W. | |

EPO Form 1503. 03.82